# EUROPEAN PATENT APPLICATION

(11) **EP 4 717 959 A1**
(43) Date of publication of application: **01.04.2026**
(21) Application number: 25203095.2
(22) Date of filing: 18.09.2025
(51) Int. Cl.: F16K 31/524, F16K 31/53, F16K 1/36

(54) **FLOW RATE REGULATING VALVE**

(30) Priority: 26.09.2024 JP 2024166934
(71) Applicant: Tatsuno Corporation, Tokyo 108-0073 (JP)
(72) Inventor: TAKEZAWA, Masahiro, Tokyo, 108-0073 (JP)
(74) Representative: Isarpatent

(57) **Abstract**

[OBJECT] To provide a flow rate regulating valve that handles high-pressure gas as a working fluid, which can withstand and operate under the load caused by the high pressure of the high-pressure gas, and is resistant to wear.

[SOLUTION] A flow rate regulating valve 100 of the present invention includes: a valve stem 1 whose flow passage cross-sectional area and flow rate vary depending on a size of the valve stem 1 inserted into a flow passage 3; a cam plate 11 having a slope formed on its surface 11A; a drive source 20 for rotating the cam plate 11; and a cam follower (cam follower rod) 12 having a truncated cone-shaped roller 12A pressed against the surface 11A of the cam plate 11, the roller 12A rolling on the surface 11A of the cam plate 11 to move the valve stem 1 in an axial direction of the valve stem 1, wherein the surface 11A of the cam plate 11 is complementary in shape to the roller 12A of the cam follower 12.

## Description

### BACKGROUND

### 1. Field of the Invention

The present invention relates to a flow rate regulating valve, for example, a needle valve type flow rate regulating valve for high pressure gas.

### 2. Description of the Related Art

There are flow rate regulating valves for high pressure gas that adjust the valve opening by moving a valve body back and forth in the axial direction of a valve stem. In such flow rate regulating valves, there are those in which the valve body or the valve stem is operated by an actuator such as a stepping motor as described in JP2021-196001A, and those in which an air valve is provided separately and operated by air. However, in the case of a flow rate regulating valve for high pressure gas, since the pressure of the high-pressure gas, which is a working fluid, acts on the valve body, it is necessary to operate the valve body under a large load in order to move the valve body back and forth, and there is a problem that the actuator or air valve itself becomes large. There is also a problem that a device for controlling the large actuator or air valve itself is required.

Here, by using a rotating device such as a motor as a power source and converting rotational motion into linear motion using a screw mechanism, it is possible to reciprocate the valve body in the axial direction of the valve stem to adjust the valve opening. If a motor is used as the power source, it is possible to directly control the valve opening by controlling the motor. However, since the rotational motion is converted into linear motion using a screw mechanism, the pressure of the high-pressure gas, which is the working fluid, acts on the threads of the screw mechanism, causing wear in the screw-threaded portion, which reduces durability.

The content of JP2021-196001A gazette is incorporated herein by reference in its entirety.

### BRIEF SUMMARY

The present invention has been proposed in consideration of the problems of the conventional technology described above, and aims to provide a flow rate regulating valve that handles high-pressure gas as a working fluid, that can withstand the load caused by the high pressure of the high-pressure gas when operating, and that is less susceptible to wear.

### [Means for solving the problem]

A flow rate regulating valve 100 of the present invention is characterized by including: a valve stem 1 whose flow passage cross-sectional area and flow rate vary depending on a size of the valve stem 1 inserted into a flow passage 3; a cam plate 11 having a slope formed on its surface 11A; a drive source 20 for rotating the cam plate 11; and a cam follower 12 having a truncated cone-shaped roller 12A pressed against the surface 11A of the cam plate 11, the roller 12A rolling on the surface 11A of the cam plate 11 to move the valve stem 1 in an axial direction of the valve stem 1, wherein the surface 11A of the cam plate 11 is complementary in shape to the roller 12A of the cam follower 12.

In the present invention, the cam plate 11 preferably rotates around a point RC (VT) where extensions of ridges of the truncated cone-shaped roller 12A intersect.

In addition, in the present invention, it is preferable to provide a measuring device 22 for measuring the amount of rotation of the output shaft of the drive source (motor) 20 or the amount of rotation of a gear that constitute a reduction mechanism 21, and to provide a control unit CU for controlling flow rate of the flow rate regulating valve 100 based on the measurement results of the measuring device 22.

In the flow rate regulating valve 100 of the present invention, it is preferable that the valve stem 1 with a small diameter tip 1A and a main body 2 in which a flow passage 3 is formed are provided; the valve stem tip 1A is arranged so as to be insertable into a small diameter flow passage portion 3A of the flow passage 3 formed in the main body 2; a gap δ is set to exist between an outer periphery of the valve stem tip 1A and an inner surface of the small diameter flow passage portion 3A; and the valve opening degree or flow rate varies depending on the position of the valve stem 1 in the direction of the central axis C relative to the flow passage 3.

### EFFECTS OF THE INVENTION

With the present invention having the above-mentioned configuration, the cam plate 11, which rotates using a rotating device such as the drive source 20 as a power source, and the cam follower 12, which moves in the direction of the central axis C by the cam plate 11, are used to convert rotational motion into linear motion, thereby making it possible to adjust the valve opening by reciprocating the valve element 1AT in the axial direction of the valve stem 1. If the motor 20 is used as the drive source, it is possible to directly control the valve opening by controlling the motor 20. Furthermore, according to the present invention, the rotational motion is not converted into linear motion by screw mechanisms, and the pressure of the high-pressure gas, which is the working fluid, does not act on the threads of the screw mechanism, so there is no wear on the screw-threaded portion, and the durability of the flow rate regulating valve is improved.

As described above, in a flow rate regulating valve for high pressure gas such as high-pressure hydrogen gas, the pressure of the high-pressure gas acts on the valve body in the past, a large actuator or air valve was required to reciprocate the valve body. According to the present invention, arranging a roller enables to reduce resistance, the cam plate 11 can be rotated without using a large power to adjust the position of the central axis C of the valve stem 1, so there is no need to provide a large actuator or air valve as in the conventional technology. Further, by measuring the rotation amount of the motor 20, which is the driving source, or the rotation amount of a predetermined part in the reduction mechanism, the positions of the cam surface 11A and the cam follower 12 can be specified, and by controlling the rotation amount of the motor 20 or the rotation amount of a predetermined part in the reduction mechanism 21, the axial direction C position of the valve stem 1 can be accurately controlled, so that the flow control of the high pressure gas can be accurately controlled according to the required characteristics.

In the present invention, the surface 11A of the cam plate 11 on which the cam follower 12 rolls is inclined, the portion of the cam follower roller 12A that abuts against the cam plate 11 is configured to be a truncated cone, and the surface 11A of the cam plate 11 has a shape complementary to the truncated cone portion of the cam follower roller 12A, so that when the cam follower roller 12A rotates in a circular trajectory along the cam plate surface 11A, there is no inner race difference and no slippage occurs. This makes it possible to prevent the cam follower roller 12A from wearing out.

### BRIEF DESCRIPTION OF THE DRAWINGS

[Figure 1] A cross-sectional view of a flow rate regulating valve according to an embodiment of the present invention.
[Figure 2] A characteristic diagram showing a desirable flow rate regulating valve opening-hydrogen flow rate characteristic when filling an FCV with hydrogen.
[Figure 3] An enlarged cross-sectional view showing the relative positions of the valve stem tip and the small diameter flow passage portion when the flow rate regulating valve according to the illustrated embodiment is closed.
[Figure 4] An enlarged cross-sectional view showing the relative positions of the valve stem tip and the small diameter flow passage portion in a state of a small flow rate region of the flow rate regulating valve.
[Figure 5] An enlarged cross-sectional view showing the relative positions of the valve stem tip and the small diameter flow passage portion at the boundary between the small flow rate region and the large flow rate region of the flow rate regulating valve.
[Figure 6] An enlarged cross-sectional view showing the relative positions of the valve stem tip and the small diameter flow passage portion in a large flow rate region of the flow regulating valve.
[Figure 7] A perspective view of the flow rate regulating valve shown in Fig. 1
[Figure 8] A perspective view showing the configuration of Fig. 7 with the casing omitted.
[Figure 9] A perspective view showing a cam plate.
[Figure 10] A perspective view showing the cam plate, a cam follower rod, a cam follower roller, and a valve stem support assembled together.
[Figure 11] An exploded cross-sectional view showing the structure of the cam follower roller at an end of the cam follower rod.
[Figure 12] An explanatory diagram showing a problem when the cam follower roller has a cylindrical shape.
[Figure 13] An explanatory diagram showing that the problem described in Fig. 12 is eliminated when the cam follower roller has a conical shape.
[Figure 14] An explanatory diagram showing an external force acting when the cam follower roller has a conical shape.
[Figure 15] A flowchart showing opening and closing control in the illustrated embodiment.
[Figure 16] A block diagram of a control unit for executing the control in Fig. 15.
[Figure 17] A cross-sectional view showing a sealing mechanism in the illustrated embodiment.
[Figure 18] A perspective view of a hollow cylinder-flange composite member used in the seal mechanism in Fig. 1.
[Figure 19] A perspective view of a C-ring used in the seal mechanism in Fig. 1.

### DETAILED DESCRIPTION OF THE PREFERRED EMBODIMENTS

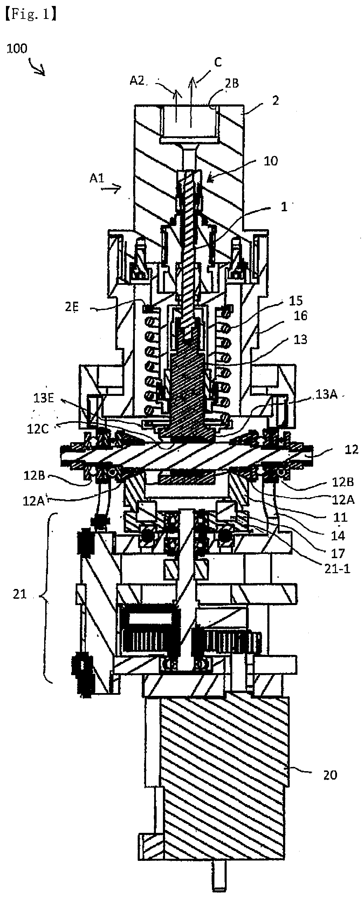

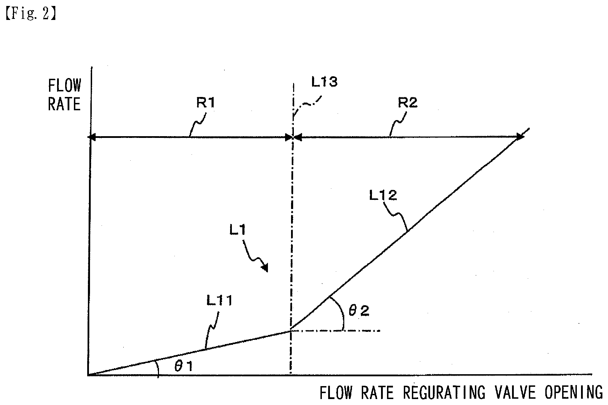

Hereinafter, an embodiment of the present invention will be described with reference to the accompanying drawings. In the illustrated embodiment, a working fluid is, for example, high-pressure hydrogen gas. First, an embodiment of the present invention will be described with reference to Figs. 1 to 16. In Fig. 1, which shows a cross section of a flow rate regulating valve 100 according to the illustrated embodiment, a high-pressure hydrogen gas, which is the working fluid, flows in from an inlet (not shown) (the direction of inflow is shown by an arrow A1), and is supplied to the downstream side of the discharge port 2B via a flow passage adjustment unit 10 (an arrow A2). In Fig. 1, the flow passage adjustment unit 10 has a valve body and a valve seat, and has a function of adjusting the flow rate by changing valve opening. Details of the flow passage adjustment unit 10 will be described later with reference to Figs. 2 to 6.

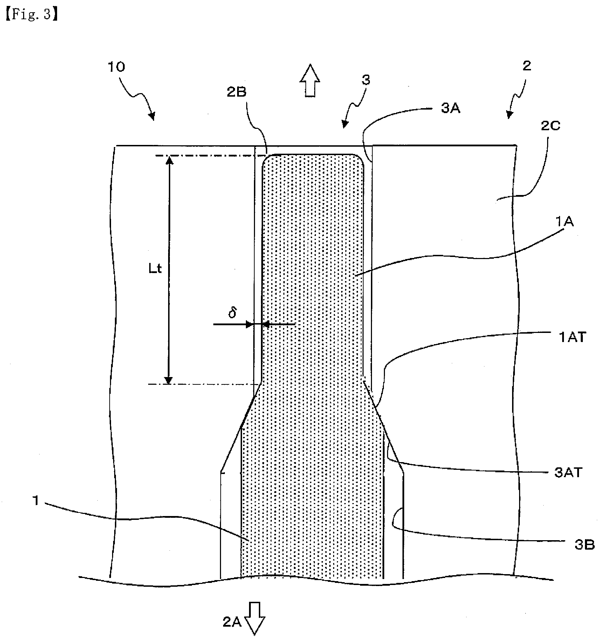

In Fig. 1, the flow rate regulating valve generally indicated by the reference numeral 100 includes a main body 2 (flow passage adjustment section casing), a valve stem support 13, a cam plate 11, a cam follower rod (cam follower) 12, an electric motor (drive source) 20, and a reduction mechanism 21. A flow passage 3 (see Figs. 3 to 6) is formed in the main body 2, and the flow passage 3 is a part of the flow passage adjustment section 10. The valve stem support 13 supports the valve stem 1, and the valve stem 1 has a valve stem tip 1A (see Figs. 3 to 6). The electric motor 20 drives the cam plate 11 to rotate via the reduction mechanism 21. A spring 15 is interposed between an abutment section 2E on the main body 2 side and an abutment section 13E near the lower end of the valve stem support 13, and the spring 15 presses the valve stem support 13 downward in Fig. 1. The flow rate regulating valve 100 includes a cam plate side casing 14 and a valve stem support section casing 16. The cam plate side casing 14 surrounds from near the lower end of the valve stem support 13 to below the cam follower rod 12 and the cam plate 11. The valve stem support casing 16 surrounds from near the lower end of the main body portion 2 to near the lower end of the valve stem support 13 and the spring 15.

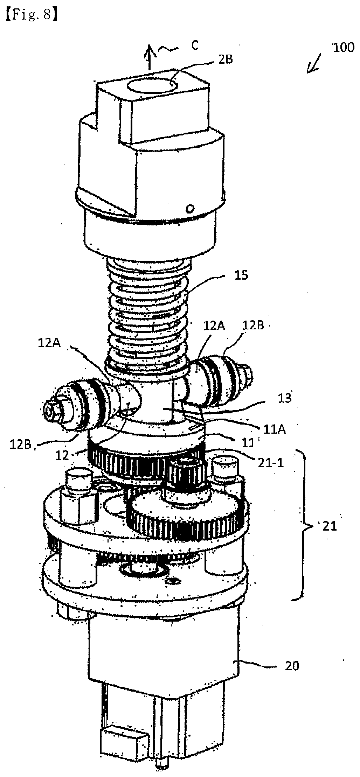

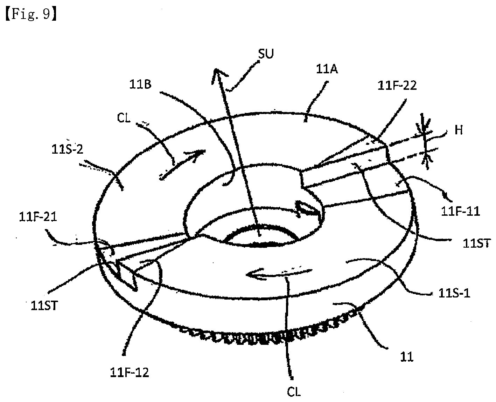

The thickness of the cam plate 11 (the thickness in the vertical direction in Fig. 1) changes smoothly in the radial and circumferential directions. The cam follower rod 12 is rod-shaped as a whole, and has cam follower rollers 12A near both ends that are rotatably pressed against the surface 11A (upper surface: Figs. 8 and 9) of the cam plate 11. The cam follower rollers 12A are rotatably pressed against the surface 11A of the cam plate 11 by the elastic force of the spring 15.

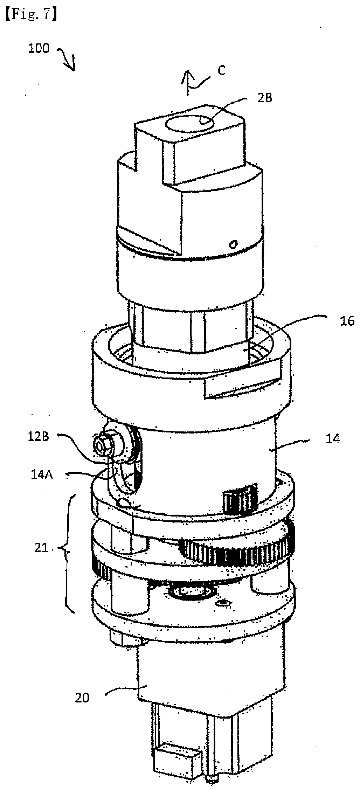

In Fig. 1, long hole contact bearings 12B are provided at both ends of the cam follower rod 12, which are inserted into long holes 14A (see Fig. 7) formed in the cam plate side casing 14 and are movable in the longitudinal direction (up and down direction in Fig. 1) within the long holes 14A. A bearing capable of receiving a radial load is used for the long hole contact bearings 12B.

In Fig. 1, the cam follower rod 12 is provided directly above the cam plate 11 and is connected to a base 13A of the valve stem support 13 extending in the direction of the central axis C via a connecting part bearing 12C. A bearing that receives a thrust load is used for the connecting part bearing 12C. The other end of the valve stem support 13 (the end part on the side away from the cam follower rod 12: the upper end part in Fig. 1) is connected to the valve stem 1.

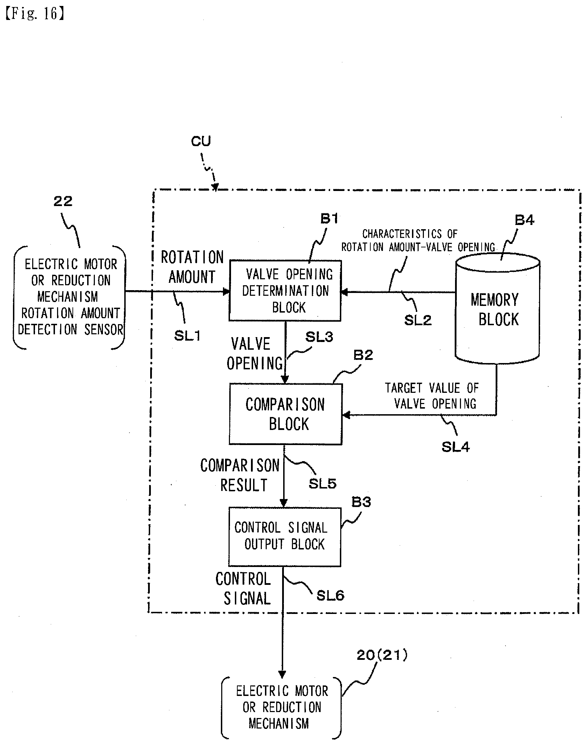

In Fig. 1, the reduction mechanism 21 is for reducing the rotational speed of the output of the electric motor 20 and transmitting it, but is not limited to the structure shown in the figure, and a conventionally known structure can be applied. However, in the illustrated embodiment, a reduction mechanism equipped with a thrust bearing or the like and capable of withstanding operation under a condition in which high-pressure hydrogen gas is added is adopted. Although not clearly shown, a thrust bearing can be attached to the gear of the reduction mechanism 21. A gear 21-1, which is provided at a position closest to the cam plate 11 among the gears constituting the reduction mechanism 21, and the cam plate 11 are integrated by fitting a key 17. Although not shown in Fig. 1, in the illustrated embodiment, a control unit CU (see Fig. 16) for controlling the flow rate of the flow rate regulating valve 100 is provided. In addition, a measuring device 22 (rotation amount sensor: see Fig. 16) for measuring the rotation amount of the output shaft of the electric motor 20 or the rotation amount of the gear constituting the reduction mechanism 21 is provided.

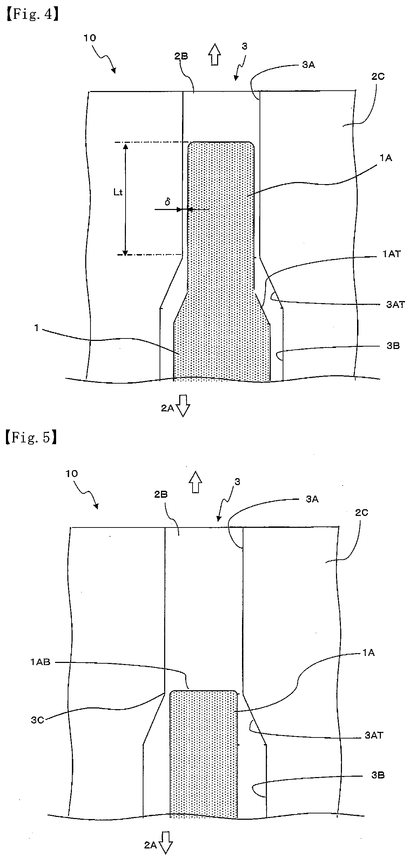

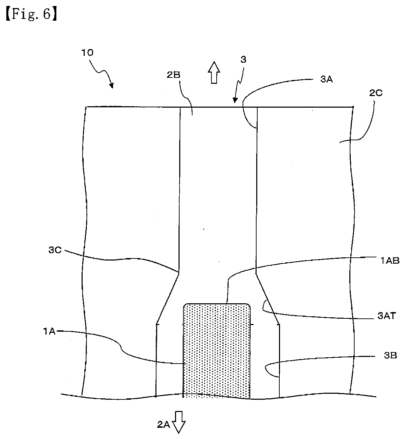

Next, the flow passage adjustment unit 10 will be described with reference to Fig. 2 to Fig. 6. In Fig. 2, the characteristic line L1 (L11, L12) shows the characteristics of the opening degree and hydrogen flow rate of the flow rate adjustment valve 100. When the valve is opened from the closed state (an origin of Fig. 2), the flow rate gradually increases and moves to the upper region of Fig. 2, and the flow rate moves from the small flow rate region R1 with a small opening degree to the large flow rate region R2 with an increased opening degree. In the small flow rate region R1, the slope θ1 of the characteristic line L11 is small and the pressure rise is also small, so that damage to a fuel tank and various piping of the fuel cell vehicle (FCV) to be filled can be reduced. On the other hand, in the large flow rate region R2, the slope θ2 of the characteristic line L12 is large, so that the hydrogen flow rate is large and it is possible to meet the demand for high-speed hydrogen filling. The operation of the flow rate adjustment valve 100 in the small flow rate region R1 will be described with reference to Fig. 3 to Fig. 5, and the operation of the flow rate adjustment valve 100 in the large flow rate region R2 will be described with reference to Fig. 6. In Fig. 2, reference symbol L13 indicates the boundary between the small flow rate region R1 and the second flow rate region R2, and the state at the boundary L13 will be described with reference to Fig. 5.

In Fig. 3, the flow passage 3 is formed in a flow passage forming portion 2C of the main body 2, and the flow passage 3 has a flow passage small diameter portion 3A communicating with the outlet 2B, a flow passage large diameter portion 3B communicating with the flow passage inlet 2A, and a flow passage tapered portion 3AT connecting them. An arrow 2A indicates the direction of the flow passage inlet. A valve stem tip tapered portion 1AT is formed on the inlet side (lower side in Fig. 3) of the valve stem tip 1A, and the valve stem tip tapered portion 1AT is continuous with the valve stem 1. In the state of Fig. 3, the valve stem tip 1A is inserted into the flow passage small diameter portion 3A, and the valve stem tip tapered portion 1AT abuts against the flow passage tapered portion 3AT, so that the flow rate regulating valve 100 is closed. In Fig. 3, there is an annular gap δ with a minute radial dimension between an outer circumferential surface of the valve stem tip 1A and an inner circumferential surface of the flow passage small diameter portion 3A. When the flow rate regulating valve 100 is open, hydrogen flows through the annular gap δ at a small flow rate. In this case, the hydrogen flow rate depends on the flow resistance in the annular gap δ, and the flow resistance is determined by the valve stem axial length Lt (valve stem tip insertion length) of the valve stem tip 1A inserted into the flow passage small diameter portion 3A.

Figure 4 shows a state in which the valve stem 1 has been moved downward from the state shown in Fig. 3 in which the valve is closed. In Fig. 4, the valve stem tip tapered portion 1AT is separated from the flow passage tapered portion 3AT, and the flow rate regulating valve 100 is open. The valve stem tip insertion length Lt is shorter than that shown in Fig. 3. In the state shown in Fig. 4, the valve stem tip insertion length Lt is relatively long, so the flow passage resistance in the annular gap δ is large, and the flow rate of hydrogen gas flowing through the gap δ is small. When the valve stem 1 further descends and the valve stem tip insertion length Lt becomes shorter, the flow passage resistance in the gap δ becomes smaller, and the hydrogen gas flow rate increases. In the flow rate regulating valve 100 according to the embodiment shown in the figures, the valve stem tip insertion length Lt at which the valve stem tip 1A is inserted into the flow passage small diameter portion 3A is changed to change the flow passage resistance, so that the flow rate of hydrogen gas flowing through the annular gap δ can be finely adjusted.

In the state shown in Fig. 5, an end surface 1AB of the valve stem tip 1A is aligned with the boundary 3C between the flow passage small diameter portion 3A and the flow passage tapered portion 3AT. In Fig. 5, the valve stem tip insertion length Lt (see Figs. 3 and 4) is zero. Figure 5 shows the state of the boundary L13 (Fig. 2) between the small flow rate region R1 and the large flow rate region R2 in the illustrated flow rate regulating valve 100.

In Fig. 6, which shows the state in which the valve stem 1 is further lowered from the state in Fig. 5, the end surface 1AB of the valve stem tip 1A is located below a boundary 3C between the flow passage small diameter portion 3A and the flow passage tapered portion 3AT. The flow passage through which hydrogen gas flows is formed by the region between the outer circumferential surface of the valve stem tip 1A and the inner circumferential surface of the flow passage tapered portion 3AT, and its cross-sectional area is much larger than the annular gap δ, the flow passage resistance is small, and the flow rate of hydrogen gas is large (large flow rate region R2). And, when the valve stem 1 is further lowered from the state in Fig. 6, the cross-sectional area of the flow passage of hydrogen gas increases dramatically. According to the illustrated flow rate regulating valve 100, the transition of the valve from the closed state to the small flow rate state to the large flow rate state is continuously and smoothly performed by moving the valve stem tip 1A from the flow passage small diameter portion 3A to the arrow 2A side (downward). With continuous operation, when the valve is opened immediately after closing, the hydrogen gas flow rate is low, the flow rate gradually increases (small flow rate region R1), and after the state shown in Fig. 5 (L13 in Fig. 2), the hydrogen gas flow rate increases rapidly (large flow rate region R2). Here, the configuration of the flow passage adjustment unit 10 shown in Figs. 2 to 6 is merely an example. The flow passage adjustment unit 10 in the illustrated embodiment can be configured in the same way as the flow rate adjustment valve shown in JP2021-196001A gazette, for example.

In Fig. 7, long holes 14A are formed on both side surfaces of the cam plate side casing 14, and long hole contact bearings 12B provided at the ends of the cam follower rod 12 (Fig. 8) are inserted into the long holes 14A. As a result, when the cam plate 11 (Fig. 8) rotates due to the rotation of the motor 20 transmitted via the reduction mechanism 21, the valve stem support 13 and the valve stem 1 do not rotate around the central axis C but move in the direction of the central axis C.

As shown in Figs. 1 and 8, the valve stem support 13 is coupled to surround the cam follower rod 12, and the valve stem support 13 and the cam follower rod 12 are pressed toward the cam plate 11 by the spring 15. When the cam plate 11 is rotated by the electric motor 20, the cam follower rod 12 and the valve stem support 13 move in the central axial direction C of the valve stem 1 due to the inclination of the upper surface 11A of the cam plate 11.

In Fig. 8, when the cam plate 11 rotates, the inclination of the cam plate surface 11A causes the position of the cam plate surface 11A, with which the two cam follower rollers 12A near both ends of the cam follower rod 12 are in contact, to vary in the direction of the central axis C, so that the cam follower rod 12 moves in the direction of the central axis C. When the cam follower rod 12 moves in the direction of the central axis C, the valve stem 1 (Fig. 1) moves via the valve stem support 13 (Fig. 1) connected to the cam follower rod 12, and the valve opening degree of the flow rate regulating valve 100 can be adjusted. In other words, by controlling the rotation angle of the cam plate 11, the positions of the cam follower rod 12 and the valve stem 1 in the direction of the central axis C can be adjusted, and the valve opening degree of the flow rate regulating valve 100 can be controlled.

In the illustrated embodiment, the electric motor 20 is used as a power source, and the cam plate 11 and the cam follower rod 12 convert the rotary motion into linear motion, thereby reciprocating the valve body 1AT (Figs. 3 to 6) in the axial direction C of the valve stem 1 to adjust the valve opening. In addition, according to the illustrated embodiment, a screw mechanism for converting rotary motion into linear motion is not adopted, so the pressure of the high-pressure hydrogen gas, which is the working fluid, does not act on the threads of the screw mechanism, and wear and damage do not occur in the screw threading portion. This improves the durability of the flow rate regulating valve 100. Furthermore, by appropriately arranging bearings in the cam follower rod 12, the valve stem support 13, and the reduction mechanism 21 to reduce resistance, the cam plate 11 can be rotated without using a large power to adjust the position of the valve stem 1 in the central axis C direction, so there is no need to provide a large actuator or air valve as in conventional technologies. And, measuring the amount of rotation of the electric motor 20 or the amount of rotation of a specific location in the reduction mechanism 21 allows the positions of the cam plate surface 11A and the cam follower rod 12 to be identified, and controlling the amount of rotation allows the position of the valve stem 1 in the direction of the central axis C to be accurately controlled, thereby making it possible to accurately control the flow rate of high-pressure gas.

As shown in Fig. 9, the cam surface 11A is formed with inclined surfaces 11S (11S-1, 11S-2) corresponding to the displacement of the valve stem 1 (Fig. 1), flat surfaces 11F (11F-11, 11F-12, 11F-21, 11F-22), and step portions 11ST. The inclined surfaces 11S and the flat surfaces 11F are formed to be point symmetrical with respect to the center of the opening 11B in the center of the cam plate 11. The flat surfaces 11F are provided to prevent inconvenience caused by the electric motor 20 (Fig. 1) rotating too much and the cam plate 11 rotating too much, causing the valve opening to be adjusted to deviate from the predetermined range. In other words, because of the flat surfaces 11F, even if the electric motor 20 and the cam plate 11 rotate too much, the valve stem 1 does not displace more than necessary, and the valve opening is prevented from becoming larger or smaller than the predetermined amount, and the flow rate regulating valve 100 is opened and closed within the predetermined range. This makes it possible to prevent damage to the valve seat 3AT and the valve stem 1.

The inclined surfaces 11S-1 and 11S-2 gradually protrude in a circumferential direction CL from the same height as the flat surfaces 11F-11 and 11F-21 in the moving direction SU of the valve stem 1 relative to the flat surfaces 11F-11 and 11F-21 in the direction of the arrow SU. When the inclined surfaces 11S-1 and 11S-2 pass the position where they protrude most in the direction of the arrow SU, they reach the flat surfaces 11F-12 and 11F-22. The circumferential distance of the flat surfaces 11F-11 and 11F-21 is shorter than that of the inclined surfaces 11S-1 and 11S-2. A step portion 11ST is formed at the boundary between the flat surface 11F-12 and the flat surface 11F-21 and at the boundary between the flat surface 11F-22 and the flat surface 11F-11. In Fig. 9, the height of the step portion 11ST in the direction of the arrow SU is indicated by a symbol H. The height H of the step portion 11ST is equal to the movement distance of the valve stem central axis when the valve at the valve stem tip 1A is rapidly opened (Fig. 3), or the distance from the position of the valve stem tip 1A in Fig. 3 (the valve closing position of the flow rate regulating valve 100) to the position of the valve stem tip 1A in Fig. 6 (the large flow region of the flow rate regulating valve 100).

Mainly referring to Fig. 9, the normal opening and closing of the flow rate regulating valve 100 by the rotation of the cam plate 11 and the case of rapid opening will be described. In the normal valve opening and closing, the cam plate 11 rotates and the cam follower rod 12 does not rotate, but the cam follower rollers 12A near both ends of the cam follower rod 12 move relatively (rotate relatively) on the cam plate 11 in a state of point symmetry with respect to the central opening 11B of the cam plate 11 while contacting the inclined surfaces 11S-1 and 11S-2 of the cam plate 11. At that time, the axial position of the valve stem 1 is determined according to the amount of protrusion of the inclined surface 11S toward the valve stem 1 (the amount of protrusion toward the arrow SU side) at the contact position between the cam follower rollers 12A and the inclined surface 11S, and the valve opening degree of the flow rate regulating valve 100 is adjusted. For example, when the cam plate 11 advances in the direction of the arrow CL, the amount of protrusion increases, and the valve stem 1 moves in a direction to close the flow rate regulating valve 100. On the other hand, when the cam plate 11 moves in the opposite direction of the arrow CL, the amount of projection decreases, and the valve stem 1 moves in a direction that opens the flow rate regulating valve 100. When the amount of projection increases and the contact position reaches a position adjacent to flat surface 11F-12 or 11F-22, the flow rate regulating valve 100 is closed. On the other hand, when the amount of projection decreases and the contact position reaches a position adjacent to flat surface 11F-11 or 11F-21, the flow rate regulating valve 100 is opened.

When the cam plate 11 rotates in the direction of the arrow CL from the closed state of the flow rate regulating valve 100, the contact position between the cam follower roller 12A and the inclined surface 11S moves beyond the step 11ST to the flat surface 11F-11 or 11F-21. At that time, the cam follower roller 12A descends by the height H of the step 11ST in the direction of the arrow SU, and the valve stem 1 moves in the direction to open the flow rate regulating valve 100. As a result, the flow rate regulating valve 100 instantly goes from the closed state to fully open (rapid opening of the valve).

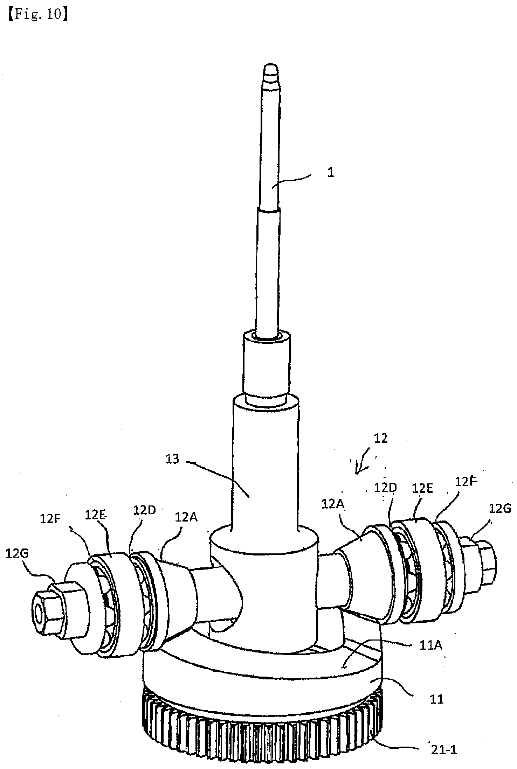

In Fig. 10, which shows the assembled state of the cam plate 11, the cam follower rod 12, the cam follower roller 12A, and the valve stem support 13, the upper end of the valve stem support 13 is connected to the valve stem 1. As shown in Fig. 1, the lower end of the valve stem support 13 is connected to the cam follower rod (cam follower) 12. The part of the cam follower roller 12A that abuts against the cam plate surface (upper surface) 11A is formed in a truncated cone shape. In the cam follower rod 12, a first thrust bearing 12D, a thrust bearing housing member 12E, a second thrust bearing 12F, and a fastening member 12G are provided radially outward of the cam follower roller 12A. The second thrust bearing 12F and the thrust bearing housing member 12E constitute the long hole contact bearing 12B in Figs. 1, 7, and 8.

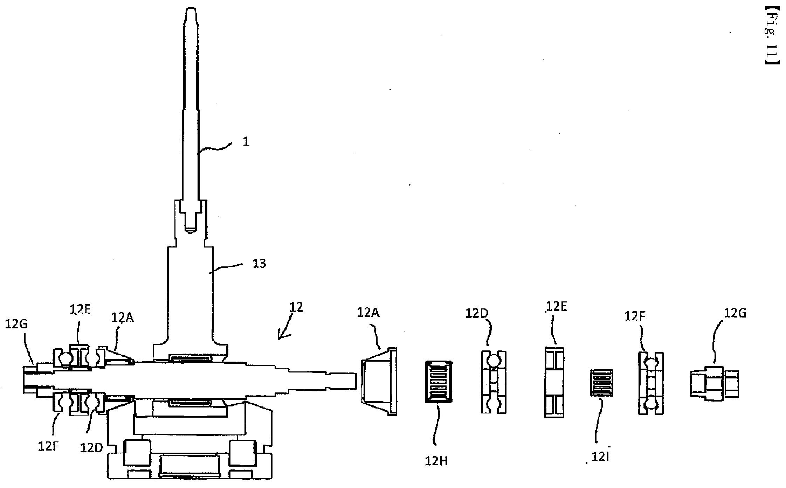

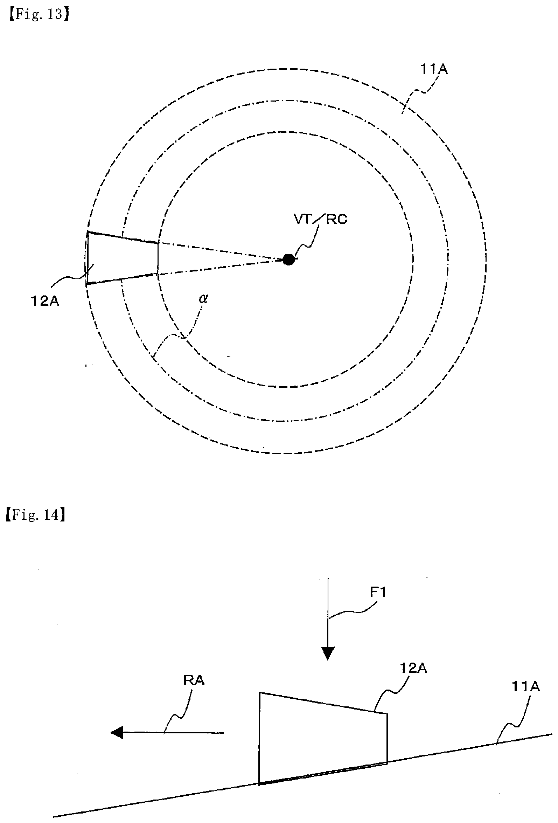

As shown in Fig. 11, which is an exploded cross-sectional view of the mounting structure of the cam follower roller 12A, a bearing 12H that receives a radial load is disposed inside the cam follower roller 12A. A bearing 12I that receives a radial load is disposed inside the thrust bearing housing member 12E. A first thrust bearing 12D is disposed radially inward of the thrust bearing housing member 12E (in the axial direction of the cam follower rod 12, on the left side in Fig. 11), and a second thrust bearing 12F is disposed radially outward (in the axial direction of the cam follower rod 12, on the right side in Fig. 11). As will be described later with reference to Fig. 14, a force indicated by the symbol RA always acts radially outward on the truncated cone member of the cam follower roller 12A. However, the first thrust bearing 12D supports the radially outward force RA, preventing the cam follower roller 12A from moving radially outward. In addition, the first thrust bearing 12D has a function of absorbing the rotation difference between the rotatable cam follower roller 12A and the non-rotating thrust bearing housing member 12E. The two cam follower rollers 12A arranged on the cam follower rod 12 rotate in opposite directions to each other, causing twisting in the rod 12. The second thrust bearing 12F has a function of absorbing twisting of the rod and preventing loosening of the fastening member 12G due to the twisting.

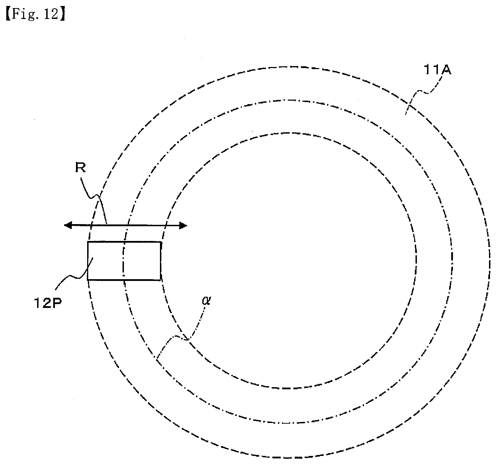

A problem that occurs when the cam follower roller 12A is cylindrical (prior art) unlike the illustrated embodiment will be described with reference to Fig. 12. When the cam plate 11 rotates, a cylindrical member 12P as a cam follower roller rolls along the cam plate surface 11A in a circular locus such as locus α. At this time, the distance that the cam follower roller moves on the cam plate surface 11A varies depending on the distance to the rotation center point of the cam plate 11. On the other hand, since the movement distance of the cylindrical member 12P when it rotates once is constant, the cylindrical member 12P slips at a certain point of the dimension R. To solve this problem, it is necessary to make the ratio between the movement distance of the cam follower rod 12 and the movement distance of the cam follower roller 12A when it rotates once equal regardless of the distance to the rotation center point of the cam plate 11.

In contrast, in the illustrated embodiment, a truncated cone-shaped member is used as the cam driven roller 12A. When a virtual vertex VT of the cam driven roller 12A (the vertex of the virtual cone when the cam driven roller 12A is assumed to be conical) coincides with the rotation center RC of the cam plate 11, and when the intersection of the extensions of the ridges on both sides of the truncated cone coincides with the rotation center RC of the cam plate 11, the ratio between the travel distance of the cam follower rod 12 and the travel distance of the cam driven roller 12A when it rotates once becomes equal, and slippage is prevented. In the illustrated embodiment, the virtual vertex VT of the truncated cone-shaped cam driven roller 12A is configured to coincide with the rotation center RC of the cam plate 11.

In Fig. 14, which shows the cam follower roller 12A on the cam plate surface 11A as viewed from the side, a downward pressing force F1 due to the high pressure of the working gas always acts on the cam follower roller 12A, and therefore a radially outward force RA always acts on the cam follower roller 12A. The first thrust bearing 12D shown in Figs. 10 and 11 is provided to support the radially outward force RA acting on the cam follower roller 12A.

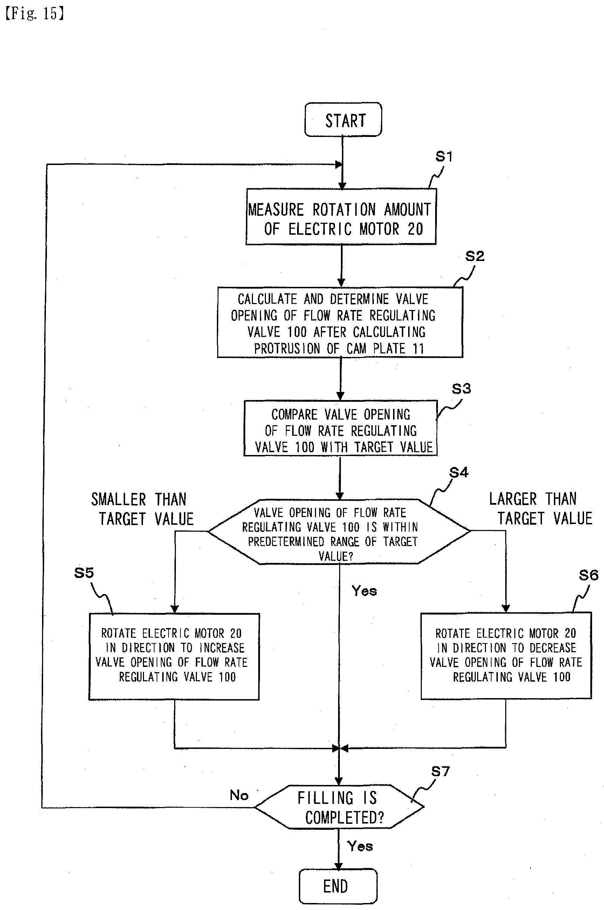

The above-mentioned opening and closing control of the flow rate regulating valve 100 will be described mainly with reference to Fig. 15. In Fig. 15, in step S1, the rotation amount of the electric motor 20 (Fig. 1) is measured by the rotation amount measuring device 22 (see Fig. 16). When measuring the rotation amount, instead of measuring the electric motor 20, the rotation amount of any gear of the reduction mechanism 21 (Fig. 1) may be measured. In step S2, the valve opening degree of the flow rate regulating valve 100 is calculated and determined based on the rotation amount (of the electric motor 20 or any gear of the reduction mechanism 21) measured in step S1. When calculating the valve opening degree of the flow rate regulating valve 100, the movement amount of the valve stem 1 in the direction of the central axis C is calculated based on the rotation amount measured in step S1, and the valve opening degree of the flow rate regulating valve 100 is calculated. Here, various parameters may be determined by calculation, but it is also possible to specify in advance mathematical expressions or charts showing mutual relationships, etc., and determine the necessary parameters from the mathematical expressions or charts.

In the next step S3, the valve opening of the flow rate regulating valve 100 calculated and determined in step S2 is compared with a target value (valve opening in Fig. 2). The target value of the valve opening is, for example, a target value with elapsed time as a parameter, for example the characteristic shown in Fig. 2, but may be determined by a parameter other than elapsed time. In step S4, in response to the comparison result of step S3, it is determined whether the valve opening of the flow rate regulating valve 100 determined in step S2 is within a predetermined range of the target value. If the result of the determination in step S4 is that the valve opening of the flow rate regulating valve 100 is smaller than the predetermined range of the target value, the process proceeds to step S5, and if the valve opening is larger than the predetermined range of the target value, the process proceeds to step S6. Then, if the valve opening of the flow rate regulating valve 100 is within the predetermined range of the target value (step S4 is "Yes"), the electric motor 20 is not rotated and the process proceeds to step S7.

In step S5 (when the valve opening is smaller than the predetermined range of the target value), the electric motor 20 is rotated by a predetermined small amount in a direction to increase the valve opening of the flow rate regulating valve 100. In step S6 (when the valve opening is larger than the predetermined range of the target value), the electric motor 20 is rotated by a predetermined small amount in a direction to decrease the valve opening of the flow rate regulating valve 100. In step S7 (when the valve opening is within the predetermined range of the target value), it is determined whether or not the filling of hydrogen gas using the system including the flow rate regulating valve 100 has been completed. If it is determined in step S7 that "filling has been completed" (step S7 is "Yes"), the hydrogen gas filling operation is completed, and if "filling has not been completed" (step S7 is "No"), the process returns to step S1 (a loop in which step S7 is "No"). Although not shown in Fig. 15, in the case of rapid opening of the valve, it is determined whether or not the flow rate regulating valve 100 is in a closed state, and it is determined whether or not rapid opening should be performed according to the hydrogen filling protocol. When rapid opening is required, the electric motor 20 is rotated to move the contact position between the cam driven roller 12A and the inclined surface 11S of the cam plate 11 from the flat surfaces 11F-12, 11F-22 over the step portions 11ST to the flat surfaces 11F-21, 11F-11.

The control unit CU that controls the opening and closing of the flow rate regulating valve 100 described with reference to Fig. 15 will be described with reference to Fig. 16. In Fig. 16, the control unit CU has a valve opening determination block B1, a comparison block B2, a control signal output block B3, and a memory block B4. The valve opening determination block B1 acquires a detection value of the rotation amount from an electric motor rotation amount detection sensor (measurement device) 22 that measures the rotation amount of the electric motor 20 via a signal transmission line SL1. As described above, instead of measuring the rotation amount of the electric motor 20, the rotation amount of any gear of the reduction mechanism 21 may be measured. The valve opening determination block B1 acquires the "characteristics of the rotation amount of the electric motor 20 - the valve opening of the flow rate regulating valve 100" stored in the memory block B4 via a signal transmission line SL2. The relationship between the rotation amount of the electric motor 20 and the amount of protrusion in the central axis direction at the contact position between the cam plate inclined surface 11S and the cam follower roller 12A (the amount of movement of the valve stem 1, the valve stem tip 1A in the direction of the central axis C) or the valve opening degree of the flow rate regulating valve 100 is determined in advance, and the valve opening degree of the flow rate regulating valve 100 can be calculated from the rotation amount of the electric motor 20, etc. based on this predetermined relationship.

The valve opening determination block B1 has a function of calculating and determining the valve opening of the flow rate regulating valve 100 by comparing the acquired detection value of the rotation amount of the electric motor 20, etc. with the "characteristics of the rotation amount of the electric motor 20 - the valve opening of the flow rate regulating valve 100." The "valve opening of the flow rate regulating valve 100" determined by the valve opening determination block B1 is transmitted to the comparison block B2 via a signal transmission line SL3.

The comparison block B2 acquires a target value of the valve opening of the flow rate regulating valve 100 (e.g., a target value with elapsed time as a parameter) from the memory block B4 via a signal transmission line SL4. The comparison block B2 has a function of comparing the valve opening of the flow rate regulating valve 100 determined in the valve opening determination block B1 with the target value of the valve opening. The comparison result of the comparison block B2 is transmitted to the control signal output block B3 via a signal transmission line SL5.

The control signal output block B3 has a function of outputting a control signal to the electric motor 20 via a signal transmission line SL6 so that the valve opening of the flow rate regulating valve 100 becomes a target value (or a numerical value within a predetermined range from the target value) based on the comparison result by the comparison block B2. As explained in steps S5 and S6 in Fig. 15, the control signal is a "control signal for rotating the electric motor 20 in a direction that increases the valve opening of the flow rate regulating valve 100" or a "control signal for rotating the electric motor 20 in a direction that decreases the valve opening of the flow rate regulating valve 100". The memory block B4 has a function of storing information and data necessary for opening and closing control of the flow rate regulating valve 100, and providing them to each functional block as necessary. The information and data stored in the memory block B4 include, for example, specification data regarding the components that make up the flow rate regulating valve 100 (valve stem 1, main body 2, flow passage 3, cam plate 11, inclined surface 11S of the cam plate 11, cam follower rod 12, electric motor 20, reduction mechanism 21), the characteristics of the rotation amount of the electric motor 20 - valve opening degree of the flow rate regulating valve 100, the target value of the valve opening degree of the flow rate regulating valve 100, etc.

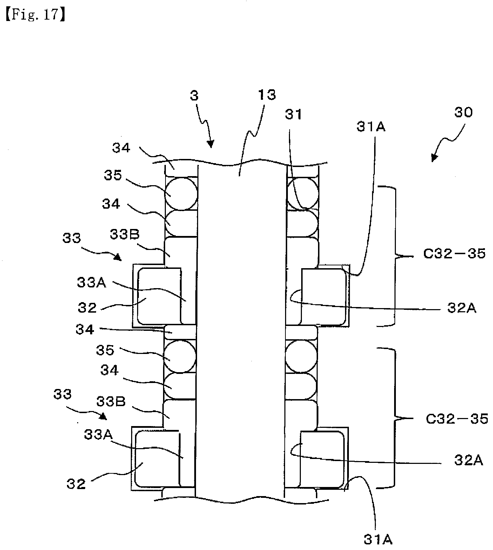

Next, the sealing mechanism will be described with reference to Figs. 17, 18, and 19. In order to prevent high-pressure hydrogen from leaking from the portion where the valve stem 1 slides, in the flow rate regulating valve 100, a sealing mechanism 30 is provided at the position where the valve stem support 13 slides. To avoid complication due to illustration, the sealing mechanism 30 is not shown in Fig. 1.

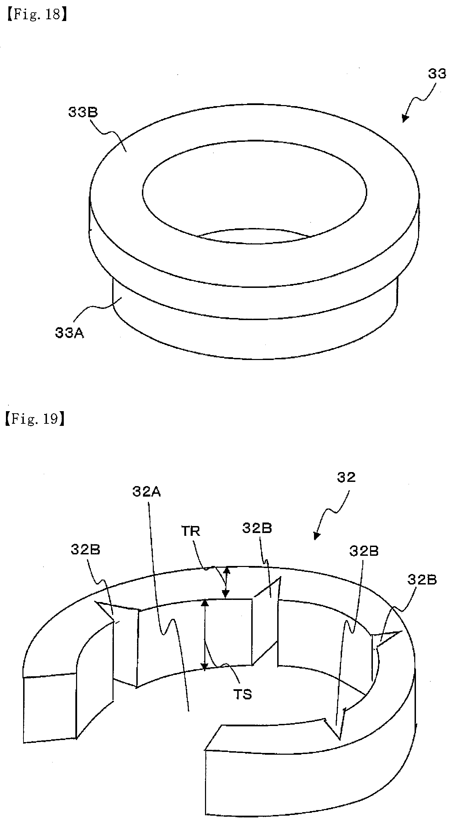

In Fig. 18, the hollow cylinder-flange composite member 33 has a hollow cylindrical region (main body) 33A extending in the central axis direction (vertical direction), and the hollow cylinder-flange composite member 33 is inserted and arranged in the hollow portion 32A (Fig. 17) at the radial center of the C-ring 32. This prevents the C-ring 32 from shrinking radially inward. The main body 33A of the hollow cylinder-flange composite member 33 is formed with a flange 33B extending radially outward, and a backup ring 34 and an O-ring 35 (Fig. 17) are placed on the flange 33B. The backup ring 34 is provided above the O-ring 35, and the O-ring 35 is sandwiched between the two backups 34, 34 from above and below. The seal mechanism 30 shown in Fig. 17 is configured by stacking units C32-35, each of which is made up of the O- ring 35, two backup rings 34, 34, the hollow cylinder-flange composite member 33, and the C-ring 32, in multiple stages. Figure 17 shows a state in which units C32-35 are stacked in two stages.

Adopting such a configuration allows the seal mechanism 30, which is configured by stacking multiple units C32-35, to be easily arranged by forming the expanded diameter portion 31A into which the C-ring 32 fits without increasing the inner diameter of the hollow portion in which the valve stem actuation valve stem 13 slides, and leakage of high-pressure hydrogen gas can be reliably prevented. The seal mechanism 30 can be arranged at any position where a shaft slides other than the position where the valve stem actuation valve stem 13 slides. Although not shown, a cup seal can be used instead of the O-ring 35. In that case, it is preferable to arrange the cup seal so that the open direction is upward (the discharge port 2B side in Fig. 1).

The C-ring 32 shown in Fig. 19 is made of metal, and is formed in a C-shape with a part of the ring cut out in the circumferential direction, and a plurality of slits 32B (four in the illustrated embodiment) are formed at approximately equal intervals in the circumferential direction. Forming the slits 32B allows the C-ring 32 to easily expand radially outward, and the main body 33A of the hollow cylinder-flange composite member 33 can easily be inserted into the hollow part 32A at the radial center of the C-ring 32. The slits 32B may be formed in less than three places or in five places or more (for example, two to six places). The central axial dimension TS of the C-ring 32 (vertical direction in Fig. 1) is set to be thicker than the radial dimension TR. The ratio of the radial dimension TR to the central axial dimension TS of the C-ring 32 is set in the range of 1:1 to 1:10. This is because if the axial dimension TS of the C-ring 32 is thick, the C-ring 32 is less likely to contract in the radial direction. The central axis dimension TS of the C-ring 32 is set to a value that can resist the shear force acting in the central axis direction. The radial thickness of the C-ring 32 is thin at the slit 32B. As described above, the body 33A of the hollow cylinder/flange composite member 33 is inserted into the hollow portion 32A of the C-ring 32, and the flange 33B of the hollow cylinder/flange composite member 33 arranged adjacent to and above the C-ring 32 covers the C-ring 32. Therefore, even if the radial thickness is thinned by the slit, there is no risk of impairing the function of the seal mechanism 30.

The backup ring 34, which is not shown as a separate item, is made of resin and prevents a portion of the O-ring 35 from extending due to high pressure and entering the gap with the inner wall (known as "O-ring protrusion"), which would cause the O-ring 35 to break at the entered portion.

It should be noted that the illustrated embodiment is merely an example and is not intended to limit the technical scope of the present invention.

### [Explanation of symbols]

1 valve stem
1A small diameter tip
2 main body
3 flow passage
3A small diameter flow passage
3B large diameter flow passage
11cam plate
11A cam surface (upper surface of cam plate)
12 cam follower rod (cam follower)
12A cam follower roller
13 valve stem support
20 electric motor
21 reduction mechanism
22 measuring device
100 flow rate regulating valve
C center axis of valve stem
CU control unit
Lt the dimension at which the valve stem is inserted into the flow passage RC center of rotation of the cam plate
δgap between the outer periphery of the valve stem tip and the inner periphery of the small diameter part of the flow passage

## Claims

1. A flow rate regulating valve comprising:
a valve stem whose flow passage cross-sectional area and flow rate vary depending on a size of the valve stem inserted into a flow passage;
a cam plate having a slope formed on its surface;
a drive source for rotating the cam plate; and
a cam follower having a truncated cone-shaped roller pressed against the surface of the cam plate, the roller rolling on the surface of the cam plate to move the valve stem in an axial direction of the valve stem,
wherein the surface of the cam plate is complementary in shape to the roller of the cam follower.

2. The flow rate regulating valve as claimed in claim 1, wherein the cam plate rotates around a point where extensions of ridges of the truncated cone-shaped roller intersect.
